# EUROPEAN PATENT APPLICATION

(11) **EP 3 954 220 A1**
(43) Date of publication of application: **16.02.2022**
(21) Application number: 19924068.0
(22) Date of filing: 10.04.2019
(51) Int. Cl.: A23J 1/14

(54) **VEGETABLE PROTEIN-CONTAINING LIQUID COMPOSITION AND METHOD FOR PRODUCING SAME**

(71) Applicant: Mizkan Holdings Co., Ltd., Handa-shi, Aichi 475-8585 (JP)
(72) Inventor: OHIKE, Masaki, Aichi 475-8585 (JP)
(74) Representative: Mewburn Ellis LLP
(86) International application number: PCT/JP2019/015587
(87) International publication number: WO 2020/208734

(57) **Abstract**

An object of the present invention is to provide a plant protein-containing liquid composition that is not aggregated and/or solidified by an acid and that is satisfactory in terms of a feeling on the tongue, a feeling of food or drink going down the throat, and a flavor, even if such composition contains a plant protein at high concentration. According to the present invention, a plant protein-containing liquid composition comprising bean-derived proteins and lipids that satisfies the requirements (a) to (e) is provided: (a) the protein content in the liquid composition is 6% to 17% by mass; (b) the mass ratio of the protein content to the lipid content is 10:0.7 to 10:5.5; (c) the Brix value is 10% or higher; (d) the dietary fiber content in the liquid composition is 3% by mass or lower; and (e) the viscosity measured using the B type viscometer satisfies at least one of the requirements (e1) to (e3): (e1) the viscosity at 20°C is 4,600 mPa·s or lower; (e2) the viscosity at 5°C is 5,000 mPa·s or lower; and (e3) the viscosity at 50°C is 3,400 mPa·s or lower.

## Description

### Technical Field

The present invention relates to a plant protein-containing liquid composition containing a plant protein at high concentration, a food or beverage product comprising such liquid composition, and a method for producing such liquid composition.

### Background Art

Along with the enhanced consciousness toward beauty and health, in recent years, a food or beverage product that realizes efficient protein intake for the purpose of not only dieting but also healthy and firm body making with an adequate amount of muscle has been desired. Proteins are classified into animal proteins, such as meat, fish, and eggs, and plant proteins, such as beans and cereals. While animal proteins exhibit high amino acid scores or high efficiency of utilization thereof in the body, an animal protein source, such as meat, contains a large amount of saturated fatty acid or cholesterol, and excessive intake thereof may induce lifestyle-related diseases or obesity. In contrast, lipids and calories in plant proteins are lower than those in animal proteins, and soybeans as representative plant protein sources and processed soybean products, such as soy sauce, soybean paste, soybean curd, and soy milk, have drawn attention since reduction in the amount of animal protein consumption and supplementation thereof with an increased amount of plant protein consumption have been proposed. However, regarding the soybeans or processed soybean products as mentioned above, it is difficult to ingest large quantities of such products, protein content in such products is low, and immediate eatability is low. For such reasons, such soybeans or processed soybean products are not satisfactory as food or beverage products that enable efficient plant protein intake.

Among the food or beverage products mentioned above, plant proteins can be easily ingested by drinking soy milk; however, lipid content in soy milk is high, and lipid-derived beany and distinctive flavors are strong. In addition, protein content per 100 g is not high enough; that is, such protein content is as low as approximately 3 to 4 g. When fruit juice with high acidity or an acidulant is added to make soy milk to be easy and delicious to drink, in addition, protein coagulation and solidification are disadvantageously caused by an acid, and, in particular, such phenomena become apparent when protein content is high.

Various attempts have been made in the past with respect to methods for improving protein content, taste, and flavor of soy milk. For example, Patent Document 1 discloses that fresh-squeezed sterilized soy milk with a rich feeling *(koku)* and a good flavor that a common soy milk does not have can be obtained by allowing a protein-crosslinking enzyme to act on soy milk obtained by a fresh squeezing method or on a soy slurry before separating soy milk from soybean curd residue (*okara*)*,* by the fresh squeezing method, followed by sterilization. When soybean solid content in such fresh-squeezed sterilized soy milk exceeds 15% by weight (protein content: approximately 7.5% by mass), however, the viscosity is excessively increased due to the reaction with a protein-crosslinking enzyme, and aggregation and coagulation are likely to occur. Patent Document 2 discloses a method of obtaining soy milk with high protein concentration by subjecting soy milk obtained without soaking by grounding at low temperature to ultrafiltration. According to such technique, however, the use of sophisticated equipment such as a ultrafilter membrane is required, productivity is low due to the processing capacity limit, and the protein concentration of soy milk obtained in the examples is as low as 5.2%. Patent Document 3 discloses a method of hydrating a soy protein and a thickener separately in 2 different containers, mixing them, and adding a liquid milk-derived protein thereto, so as to obtain a protein rich food preparation. According to such technique, however, it is necessary to increase the viscosity with the addition of a thickener and to add a liquid milk-derived animal protein. Thus, it is not possible to ingest a plant protein at high concentration. Patent Document 4 discloses a method for producing an assembly of at least one milk protein and at least one plant protein that can be used for a food as an alternative to a part of an animal-derived protein and has effective functions. According to such technique, however, the addition of a milk protein is required, and it is thus impossible to ingest a plant protein at high concentration.

### Prior Art Documents

### Patent Documents

Patent Document 1: JP 2005-204660 A
Patent Document 2: JP H4-299952 A (1992)
Patent Document 3: JP 2008-539748 A
Patent Document 4: JP 2017-512468 A

### Summary of the Invention

### Objects to Be Attained by the Invention

Under the above circumstances, it is an object of the present invention to provide a plant protein-containing liquid composition that is not aggregated and/or solidified by an acid and that is satisfactory in terms of a feeling on the tongue, a feeling of food or drink going down the throat, and a flavor, even if such composition contains a plant protein at high concentration.

### Means for Attaining the Objects

The present inventors have conducted concentrated studies in order to attain the above objects. As a result, they discovered that it would be possible to obtain a plant protein-containing liquid composition that is not aggregated and/or solidified by an acid and that is satisfactory in terms of a feeling on the tongue, a feeling of food or drink going down the throat, and a flavor, even if such composition contains a plant protein at high concentration, by adjusting a ratio of the protein content to the lipid content in the liquid composition containing a bean-derived plant protein within a given range, adjusting the Brix value and the dietary fiber content of the composition within a given range, and adjusting the viscosity measured with the use of the B type viscometer within a given range. This has led to the completion of the present invention.

Specifically, the present invention includes the following.
[1] A plant protein-containing liquid composition comprising bean-derived proteins and lipids that satisfies the requirements (a) to (e) below:
   (a) the protein content in the liquid composition is 6% to 17% by mass;
   (b) the mass ratio of the protein content to the lipid content is 10:0.7 to 10:5.5;
   (c) the Brix value is 10% or higher;
   (d) the dietary fiber content in the liquid composition is 3% by mass or lower; and
   (e) the viscosity measured using the B type viscometer satisfies at least one of the requirements (e1) to (e3) below:
      (e1) the viscosity at 20°C is 4,600 mPa·s or lower;
      (e2) the viscosity at 5°C is 5,000 mPa·s or lower; and
      (e3) the viscosity at 50°C is 3,400 mPa·s or lower.
[2] The plant protein-containing liquid composition according to [1], wherein the 50% cumulative particle diameter (D50) is 20 µm or smaller.
[3] The plant protein-containing liquid composition according to [1] or [2], wherein the liquid composition contains liquid milk made from beans subjected to at least one of the enzyme treatment and the homogenization treatment.
[4] The plant protein-containing liquid composition according to [3], wherein the enzyme is at least one of a protein-degrading enzyme and a polysaccharide-degrading enzyme.
[5] The plant protein-containing liquid composition according to [3] or [4], wherein the treatment is carried out, so that the plant protein-containing liquid composition after the treatment satisfies at least one of the requirements (f) and (g) below:
   (f) the average molecular weight of proteins in the liquid composition is 4,000 or smaller; and
   (g) the 50% cumulative particle diameter (D50) is 2 µm or smaller.
[6] The plant protein-containing liquid composition according to any of [1] to [5], wherein a pH level is 5.5 to 7.5.
[7] The plant protein-containing liquid composition according to any of [1] to [6], wherein the beans are one or more types selected from among soybeans, peas, chickpeas, *adzuki* beans, mung beans, and peanuts.
[8] The plant protein-containing liquid composition according to any of [1] to [7], wherein the beans contain soybeans in an amount of 5% by mass or more relative to the total amount of the beans.
[9] A food or beverage product comprising the plant protein-containing liquid composition according to any of [1] to [8].
[10] A method for producing the plant protein-containing liquid composition according to any of [1] to [8], comprising a step of processing liquid milk made from beans to satisfy the requirements (a) to (e) below:
   (a) the protein content in the liquid composition is 6% to 17% by mass;
   (b) the mass ratio of the protein content to the lipid content is 10:0.7 to 10:5.5;
   (c) the Brix value is 10% or higher;
   (d) the dietary fiber content in the liquid composition is 3% by mass or lower; and
   (e) the viscosity measured using the B type viscometer satisfies at least one of the requirements (e1) to (e3) below:
      (e1) the viscosity at 20°C is 4,600 mPa·s or lower;
      (e2) the viscosity at 5°C is 5,000 mPa·s or lower; and
      (e3) the viscosity at 50°C is 3,400 mPa·s or lower.
[11] The method of production according to [10], wherein the step of processing liquid milk made from beans comprises a step of subjecting the liquid milk made from beans to at least one of the enzyme treatment and the homogenization treatment.
[12] The method of production according to [11], wherein, in the step of treatment, both the enzyme treatment and the homogenization treatment are carried out and the homogenization treatment is carried out after the enzyme treatment.
[13] The method of production according to [11] or [12], wherein the step of treatment is carried out, so that the plant protein-containing liquid composition after the treatment satisfies at least one of the requirements (f) and (g) below:
   (f) the average molecular weight of proteins in the liquid composition is 4,000 or smaller; and
   (g) the 50% cumulative particle diameter (D50) is 2 µm or smaller.
[14] A method for improving a feeling on the tongue, a feeling of food or drink going down the throat, and a flavor of a plant protein-containing liquid composition comprising bean-derived proteins and lipids, comprising a step of processing liquid milk made from beans to satisfy the requirements (a) to (e) below to produce the plant protein-containing liquid composition according to any of [1] to [8]:
   (a) the protein content in the liquid composition is 6% to 17% by mass;
   (b) the mass ratio of the protein content to the lipid content is 10:0.7 to 10:5.5;
   (c) the Brix value is 10% or higher;
   (d) the dietary fiber content in the liquid composition is 3% by mass or lower; and
   (e) the viscosity measured using the B type viscometer satisfies at least one of the requirements (e1) to (e3) below:
      (e1) the viscosity at 20°C is 4,600 mPa·s or lower;
      (e2) the viscosity at 5°C is 5,000 mPa·s or lower; and
      (e3) the viscosity at 50°C is 3,400 mPa·s or lower.
[15] The method according to [14], wherein the step of processing liquid milk made from beans comprises subjecting the liquid milk made from beans to at least one of the enzyme treatment and the homogenization treatment.
[16] The method according to [15], wherein, in the step of treatment, both the enzyme treatment and the homogenization treatment are carried out and the homogenization treatment is carried out after the enzyme treatment.
[17] The method according to [15] or [16], wherein the step of treatment is carried out, so that the plant protein-containing liquid composition after the treatment satisfies at least one of the requirements (f) and (g) below:
   (f) the average molecular weight of proteins in the liquid composition is 4,000 or smaller; and
   (g) the 50% cumulative particle diameter (D50) is 2 µm or smaller.

### [Effects of the Invention]

According to the present invention, a plant protein-containing liquid composition that is not aggregated and/or solidified by an acid and that is satisfactory in terms of a feeling on the tongue, a feeling of food or drink going down the throat, and a flavor, even if such composition contains a bean-derived plant protein at high concentration, is provided. By providing the liquid composition according to the present invention in the form of a beverage or the like, a high-quality plant protein can be ingested simply, efficiently, and deliciously.

### [Embodiments of the Invention]

Hereafter, the present invention is described in detail with reference to specific embodiments. It should be noted that the present invention is not limited to the embodiments described below and that the present invention can be implemented in any form within the scope of the present invention.

### 1. Plant protein-containing liquid composition

The plant protein-containing liquid composition according to the present invention (hereafter, it may be simply referred to as "the liquid composition according to the present invention") is a plant-based material with high protein content that contains bean-derived proteins at high concentration. In the liquid composition according to the present invention, the ratio of the protein content to the lipid content, the Brix value, and the dietary fiber content are within given ranges, and the viscosity measured at given temperature using the B type viscometer is within a given range.

### (Beans)

"Beans" are not particularly limited, provided that they are edible beans of *Leguminosae.* Examples thereof include soybeans (yellow soybeans, green soybeans, and black soybeans), *adzuki* beans, black-eyed peas, mung beans, green beans, runner beans (white runner beans and purple runner beans), peas (green peas, red peas, and white peas), chickpeas, lentils, peanuts, and fava beans. Alternatively, beans resulting from oil extraction and defatting of the beans described above or beans resulting from processing, such as roasting, dehydration, dehulling, grinding, or fermentation, of the beans described above may be used herein. In particular, soybeans, defatted soybeans, peas, chickpeas, *adzuki* beans, mung beans, peanuts, and defatted peanuts are preferable. One of the beans described above may be used, or two or more of the beans described above may be used in combination. When 2 or more types of beans are used in combination, it is preferable that the soybean content be 5% by mass or more relative to the total amount of the beans.

### (Liquid milk made from beans)

In general, the term "soy milk" refers to a milky liquid that is obtained by soaking soybeans in water to swell, grinding, preparing a suspension (a soy slurry), subjecting the suspension to centrifugation or other means to separate the solid ingredient from the liquid ingredient, and removing an insoluble residue (i.e., soybean curd residue). In the present invention, "liquid milk made from beans" may be any milky liquid prepared from beans. It may be prepared in accordance with a method for producing "soy milk," and it serves as a starting material for the liquid composition according to the present invention. Specific examples of the "liquid milk made from beans" include: 1) liquid milk prepared by soaking of beans in water to swell, grinding of the resultant, addition of water thereto, concentration, and filtration to remove an insoluble residue (i.e., soybean curd residue); 2) liquid milk prepared by steaming of beans, grinding of the resultant, and filtration to remove an insoluble residue (i.e., soybean curd residue); and 3) commercially available soy milk prepared from soybeans (so-called unadjusted soy milk).

### (Protein content)

The liquid composition according to the present invention contains a protein at relatively high concentration. In the liquid composition according to the present invention, specifically, the lower limit of the protein content is generally 6% by mass or more, preferably 7% by mass or more, and more preferably 8% by mass or more, relative to the total amount of the liquid composition. When the protein content is lower than the lower limit, a protein may not be ingested efficiently. In the liquid composition according to the present invention, the upper limit of the protein content is generally 17% by mass or less, preferably 16% by mass or less, and more preferably 15% by mass or less, relative to the total amount of the liquid composition. When the protein content is higher than the higher limit, gelatinization may advance and fluidity may be lost when, in particular, refrigerated, even if the lipid content, the sugar content, and the viscosity are regulated.

The protein content in the liquid composition can be adjusted in accordance with a technique, such as concentration of liquid milk made from beans and adjustment of the amount of beans as starting materials to be incorporated.

The protein content in the liquid composition can be determined based on the amount of a starting protein source to be added. In addition, the protein content can be measured using a TN analyzer or by the Kjeldahl method.

### (Lipid content)

The lipid content in the liquid composition according to the present invention is not limited, provided that it satisfies the ratio of the protein content to the lipid content described below. The lower limit of the lipid content is, for example, 0.5% by mass or more, preferably 1% by mass or more, and more preferably 2% by mass or more, relative to the total amount of the liquid composition. When the lipid content is lower than the lower limit, bitterness or astringency of the protein becomes apparent, and protein ingestion becomes difficult in the form of a food or beverage product. In addition, a rough feeling on the tongue may occasionally become apparent. The upper limit of the lipid content in the liquid composition according to the present invention is, for example, 8% by mass or less, preferably 6% by mass or less, and more preferably 5% by mass or less, relative to the total amount of the liquid composition. When the lipid content is higher than the upper limit, the viscosity is likely to be increased, in particular, at low temperature, fluidity may be lost, and the calories may be increased in respect of nutrient intake.

The lipid content in the liquid composition can be adjusted by techniques, such as concentration of liquid milk made from beans, defatting of starting beans, or addition of bean-derived lipid ingredients.

The lipid content in the liquid composition can be calculated based on the amount of a starting material serving as a lipid source or it can be measured by the Soxhlet method.

### (Ratio of protein content to lipid content)

In the liquid composition according to the present invention, the ratio of the protein content to the lipid content is within a given range. Specifically, the ratio of the protein content to the lipid content in the liquid composition according to the present invention is generally, in terms of the protein/lipid mass ratio, 10:0.7 or more, preferably 10:0.9 or more, and more preferably 10:1 or more to generally 10:5.5 or less, preferably 10:5 or less, and more preferably 10:4 or less. When the ratio of the protein content to the lipid content is outside the range, fluidity, a feeling on the tongue, and a feeling of food or drink going down the throat may occasionally be deteriorated.

The ratio of the protein content to the lipid content in the liquid composition may be adjusted by employing a means for adjusting the protein content and a means for adjusting the lipid content in adequate combination.

### (Dietary fiber content)

The dietary fiber content in the liquid composition according to the present invention is equal to or lower than a given level. Specifically, the dietary fiber content in the liquid composition according to the present invention is generally 3% by mass or less, preferably 2% by mass or less, and more preferably 1% by mass or less, relative to the total amount of the liquid composition. It is further preferable that the liquid composition do not contain any fiber. When the dietary fiber content is higher than the lower limit, a feeling of food or drink going down the throat and a feeling on the tongue may occasionally be deteriorated.

The dietary fiber content in the liquid composition can be adjusted in accordance with a technique, such as concentration of liquid milk made from beans, adjustment of the amount of beans as starting materials to be incorporated, or removal by filtration.

The dietary fiber content in the liquid composition can be determined based on the amount of a starting dietary fiber source to be added. In addition, the dietary fiber content can be measured by the Prosky method.

### (Brix value)

In the liquid composition according to the present invention, the Brix value is equal to or higher than a given level. In the present invention, the "Brix" value is a measure indicating the total concentration of the soluble solids content (e.g., sugar, a protein, and a peptide) in a solution, which is obtained by converting the refractive index of the solution measured at 20°C into the mass/mass% of a sucrose solution using the ICUMSA (the International Committee of Uniform Method of Sugar Analysis) table. A unit is represented by "°Bx," "%," or "degrees." The Brix value of the liquid composition according to the present invention is generally 10% or higher, preferably 12% or higher, and more preferably 14% or higher. When the Brix value is lower than the lower limit, the surface roughness may become apparent, a feeling on the tongue may be deteriorated, and a flavor or taste may be deteriorated. While the upper limit of the Brix value of the liquid composition according to the present invention is not limited, it is, for example, 30% or lower, and preferably 27% or lower. When the Brix value is higher than the upper limit, a feeling of food or drink going down the throat may be deteriorated.

The Brix value of the liquid composition can be adjusted in accordance with a technique, such as concentration of liquid milk made from beans or adjustment of the amount of beans as starting materials to be incorporated.

The Brix value of the liquid composition can also be measured using a commercially available Brix meter, such as a pocket saccharimeter or a portable refractometer.

### (Viscosity)

The viscosity of the liquid composition according to the present invention measured at particular temperature is within a given range. The term "viscosity" used in the present invention refers to the viscosity of the liquid composition measured using the B type viscometer. Specifically, the liquid composition according to the present invention satisfies at least one of the viscosity conditions at 20°C, 5°C, and 50°C described below:
(1) the viscosity at 20°C is generally 4,600 mPa·s or lower, preferably 4,400 mPa·s or lower, and more preferably 4,300 mPa·s or lower;
(2) the viscosity at 5°C is generally 5,000 mPa·s or lower, preferably 4,800 mPa·s or lower, and more preferably 4,600 mPa·s or lower; and
(3) the viscosity at 50°C is generally 3,400 mPa·s or lower, preferably 3,200 mPa·s or lower, and more preferably 3,000 mPa·s or lower.

When the viscosity of the liquid composition is higher than the upper limit described above, a feeling of food or drink going down the throat may be deteriorated.

While the lower limit of the viscosity of the liquid composition according to the present invention is not limited, an excessively low viscosity may deteriorate a feeling on the tongue due to a texture of an insoluble ingredient or the like in a solution. Accordingly, it is preferable that the liquid composition according to the present invention further satisfy at least one of the viscosity conditions at 20°C, 5°C, and 50°C described below:
(1) the viscosity at 20°C is generally 5 mPa·s or higher, preferably 12 mPa·s or higher, and more preferably 20 mPa·s or higher;
(2) the viscosity at 5°C is generally 5 mPa·s or higher, preferably 12 mPa·s or higher, and more preferably 20 mPa·s or higher; and
(3) the viscosity at 50°C is generally 5 mPa·s or higher, preferably 12 mPa·s or higher, and more preferably 20 mPa·s or higher.

It is sufficient if the liquid composition according to the present invention satisfy at least 1 of the viscosity conditions at 20°C, 5°C, and 50°C described above, and it is preferable that the liquid composition satisfy the viscosity condition at temperature close to the temperature at which the liquid composition according to the present invention is used. When the liquid composition according to the present invention is used for a food or beverage product to be ingested at room temperature, for example, it is preferable that the liquid composition satisfy at least the viscosity condition at 20°C. When the liquid composition is used for a food or beverage product to be ingested at low temperature, for example, it is preferable that the liquid composition satisfy at least the viscosity condition at 5°C. When the liquid composition is used for a food or beverage product to be ingested at high temperature, for example, it is preferable that the liquid composition satisfy at least the viscosity condition at 50°C. Depending on the use, it may be preferable that the liquid composition satisfy any 2 of or all of the viscosity conditions at 20°C, 5°C, and 50°C described above. In order to stably and efficiently ingest the liquid composition in a given temperature range, in particular, it is important to maintain stable fluidity within the range described above in each temperature range. If the viscosity varies significantly depending on temperature, for example, a change in fluidity may be sensed in the mouth at the time of ingestion. Accordingly, the viscosity significantly varying depending on temperature is not preferable in terms of functions.

The viscosity of the liquid composition at each temperature can be adjusted in accordance with a technique, such as concentration of liquid milk made from beans, adjustment of the amount of beans as starting materials to be incorporated, the enzyme treatment described below, or the homogenization treatment described below.

The viscosity of the liquid composition can be measured using a commercially available B type viscometer (i.e., a single cylinder-type rotational viscometer, which is commonly referred to as the Brookfield rotational viscometer). An example of a commercially available B type viscometer is B-II, manufactured by Toki Sangyo Co., Ltd. Specifically, an adequate amount of the liquid composition adjusted at 5°C, 20°C, or 50°C is filled in a measurement container for the B type viscometer, the container is mounted on the B type viscometer, and measurement is then carried out using a rotor suitable for the measurement viscosity at adequate numbers of revolution (e.g., the rotor No. 3, the number of revolution: 30 rpm).

### (50% Cumulative particle diameter (D50))

The 50% cumulative particle diameter (D50) of the liquid composition according to the present invention is preferably within a given range. In the present invention, the term "50% cumulative particle diameter (D50)" is defined as a particle diameter that splits the particle size distribution with half above and half below, and a ratio of a cumulative value of a particle size frequency (%) of the former to that of the latter becomes 1:1. Specifically, D50 of the liquid composition according to the present invention is generally 20 µm or smaller, preferably 15 µm or smaller, more preferably 10 µm or smaller, and further preferably 5 µm or smaller. When D50 of the liquid composition exceeds the upper limit, surface roughness may be increased, and a feeling on the tongue and a feeling of food or drink going down the throat may be deteriorated. Thus, D50 exceeding the upper limit may not be preferable from the viewpoint of sensory properties.

When the protein content or the lipid content of the liquid composition is particularly high or the viscosity of the liquid composition is particularly high, the enzyme treatment and/or the homogenization treatment described below may be preferably performed to adjust D50 of the liquid composition to, for example, 2 µm or smaller, when producing the liquid composition according to the present invention. By performing the enzyme treatment and/or the homogenization treatment described below to regulate D50 of the liquid composition to a level equal to or lower than the upper limit, quality such as a feeling on the tongue can be improved.

While the lower limit of D50 of the liquid composition according to the present invention is not limited, it may be, for example, 0.5 µm or greater or 1 µm or greater. When D50 of the liquid composition is lower than the lower limit, an unfavorable taste, such as bitterness or an unpleasant taste, may be enhanced.

D50 of the liquid composition can be adjusted by, for example, adjusting conditions for grinding or solid-liquid separation when preparing liquid milk made from beans or performing the homogenization treatment described below.

D50 of the liquid composition is measured using a laser diffraction/scattering particle size distribution analyzer. As a laser diffraction/scattering particle size distribution analyzer, a laser diffraction particle size distribution analyzer, such as the Microtrac MT3300 EX-II system (MicrotracBEL Corp.), can be used. Measurement can be performed by designating the conditions, for example, as follows: particle configuration: non-spherical; particle permeability: permeable; and solvent: water. The average value determined after a plurality of measurements can be employed as the measured value.

### (Average molecular weight)

The average molecular weight of proteins in the liquid composition according to the present invention is preferably within a given range. The term "average molecular weight" of proteins used in the present invention refers to a weight average molecular weight, unless otherwise specified. Specifically, the average molecular weight of proteins in the liquid composition according to the present invention is generally 8,000 or smaller, and preferably 6,000 or smaller. When the average molecular weight of proteins in the liquid composition exceeds the upper limit, surface roughness may be increased, and a feeling on the tongue and a feeling of food or drink going down the throat may be deteriorated. Thus, the average molecular weight exceeding the upper limit is not preferable from the viewpoint of sensory properties.

When the protein content or the lipid content of the liquid composition is high or the viscosity of the liquid composition is high, in particular, the enzyme treatment and/or the homogenization treatment described below may be preferably performed to adjust the average molecular weight of proteins in the liquid composition to, for example, 4,000 or smaller or 3,000 or smaller when producing the liquid composition according to the present invention. By performing the enzyme treatment and/or the homogenization treatment described below to regulate the average molecular weight of proteins in the liquid composition to a level equal to or lower than the upper limit, quality such as a feeling on the tongue can be improved.

While the lower limit of the average molecular weight of proteins in the liquid composition according to the present invention is not limited, it may be, for example, 500 or greater or 1,000 or greater. When the average molecular weight of proteins in the liquid composition is lower than the lower limit, an unfavorable taste, such as bitterness or an unpleasant taste, may be enhanced.

The average molecular weight of proteins in the liquid composition can be adjusted by, for example, selecting types of beans to be used or performing the enzyme treatment described below.

The average molecular weight of proteins in the liquid composition can be measured by a conventional technique, such as gel filtration high-performance liquid chromatography.

### (Other ingredients)

The liquid composition according to the present invention may be supplemented with, in addition to ingredients derived from liquid milk made from beans, one or more other ingredients in adequate combination at an adequate ratio, depending on applications or other conditions. Examples of other ingredients include fruit juice, a saccharide, an acidifier, a sweetener, and a flavor agent. When the liquid composition according to the present invention contains proteins at relatively high concentration, in particular, the protein content can be maintained at a high level relative to the total amount of the liquid composition even if the amount of other ingredients to be added is increased.

### (pH)

While the lower limit of a pH level of the liquid composition according to the present invention is not particularly limited, in general, it is preferably 5.0 or higher, more preferably 5.5 or higher, and further preferably 6.0 or higher. At a low pH level, a rough feeling on the tongue or lowered fluidity may be caused, and sensory quality at the time of ingestion may be deteriorated. While the upper limit of a pH level of the liquid composition according to the present invention is not particularly limited, it is preferably 7.5 or lower, and more preferably 7.0 or lower. When the pH level of the liquid composition exceeds the upper limit, a taste or a feeling on the tongue may be deteriorated.

The pH level of the liquid composition can be adjusted by, for example, a method involving the use of an acid of fruit juice or various organic acids.

The pH level of the liquid composition can be measured by a conventional technique, such as a method of pH measurement as defined in JIS Z 8802.

### 2. Food or beverage product comprising a plant protein-containing liquid composition

While it is possible to drink the liquid composition according to the present invention without any processing, auxiliary materials, additives acceptable in accordance with the Food Sanitation Act, and the like may be adequately added within the range that the effects of the present invention would not be adversely affected to provide the resultants in the form of a food or beverage product. Accordingly, embodiments of the liquid composition according to the present invention concerning a food or beverage product encompass an embodiment in which the composition is the food or beverage product and an embodiment in which the composition is a starting material or an intermediate product when producing a food or beverage product. A food or beverage product is not limited to a liquid food or beverage product, it can be a gelatinized food or beverage product with the addition of a gelling agent (e.g., gelatin, agar, pectin, gellan gum, or sodium alginate).

Types of food or beverage products are not particularly limited. Examples thereof include: beverages, such as soy milk beverages, fruit- or vegetable-containing beverages, jelly beverages, carbonated beverages, and sports beverages; confectionaries, such as jellies, bavarois, mousse, and puddings; dairy products, such as yogurts and cheeses; frozen/ice desserts, such as ice cream, gelato, and smoothie; creams, such as whipped cream; various liquid meals, such as care food and weaning food; and seasoning products, such as soup, white sauce, pasta sauce, hot pot soup broth, mayonnaise, dressing, and *ponzu* soy sauce. In addition, the liquid composition according to the present invention would not be aggregated and/or solidified by an acid. Thus, it can be preferably incorporated into an acidic food or beverage product comprising vinegar or fruit juice with high acidity such as citrus fruits.

When the liquid composition according to the present invention is provided in the form of a food or beverage product, it can be supplemented with, for example, nuts and seeds (e.g., almonds, peanuts, walnuts, cashew nuts, hazelnuts, macadamia nuts, coconuts, sesames, pistachios, pumpkin seeds, sunflower seeds, pine nuts, boxthorn berries, *Trapa japonica* fruit, and chestnuts), fruits and fruit juices (e.g., bananas, apples, pears, kiwis, mangoes, oranges, tangerines, lemons, grapefruits, melons, grapes, peaches, strawberries, and blueberries), vegetables and vegetable juices (e.g., tomatoes, carrots, pumpkins, sweet potatoes, bell peppers, cabbages, broccolis, Japanese mustard spinaches, celeries, spinaches, kales, and molokheiya), milk, coffee, tea leaves, cocoa powders, and *amazake* (i.e., sweet fermented rice drink). Nuts and seeds are particularly preferable because they can provide a mild and good flavor and suppress a beany flavor. Nuts and seeds can be roasted, grounded, processed in the form of liquid milk, or used in other adequate forms. The food or beverage product may be supplemented with additives that are commonly used for food or beverage products. Examples of additives include: saccharides, such as sucrose, maltose, fructose, glucose, invert sugar, powdered starch syrup, dextrin, and oligosaccharide; high-intensity sweeteners, such as aspartame, stevia, sucralose, and acesulfame potassium; acidifiers, such as organic acids, such as citric acid, malic acid, tartaric acid, and acetic acid; colorants, such as safflower dye, gardenia dye, carotenoid dye, anthocyanin dye, and caramel dye; flavor agents, such as banana flavor agent, apple flavor agent, orange flavor agent, and peach flavor agent; thickeners, such as xanthan gum; and antioxidants, such as vitamin C, tocopherol, chlorogenic acid, and cysteine hydrochloride. In addition, various functional ingredients, such as vitamins (e.g., vitamin B family, vitamin C, vitamin E, or vitamin D) and minerals (e.g., calcium, potassium, or magnesium), may be added to potentiate health functions.

The term "food or beverage product" used in the present invention refers to, in addition to common food or beverage products, foods that can be ingested for the purpose of good health maintenance and promotion other than pharmaceutical products, such as health foods, functional foods, functional health foods, or foods for special dietary uses. The health foods include foods provided in the names of nutritional supplements, health supplements, and dietary supplements. The functional health foods are defined in the Food Sanitation Act or the Health Promotion Act and include foods for specified health uses and nutritional functional foods that can indicate specific effects on health, functions of nutritional ingredients, and reduction of disease risks and foods with functional claims that can indicate their scientifically substantiated functions notified to the Secretary-General of the Consumer Affairs Agency. The foods for specified health uses include foods for people with diseases, foods for elderly people, foods for infants, foods for pregnant and parturient women, and the like that are indicated to be suitable for particular targets or patients with particular diseases.

The amount of the liquid composition according to the present invention to be incorporated into the food or beverage product according to the present invention is not limited. From the viewpoint of an amount of the target food or beverage product to be commonly ingested, a configuration of the food or beverage product, the efficacy and the effects, tastes, preference, the cost, and other conditions, an adequate amount may be determined. In the case of a beverage product, for example, the amount may be determined to adjust the amount of protein intake for an adult per day to 50 to 60 g.

### 3. Method for producing a plant protein-containing liquid composition

The liquid composition according to the present invention can be produced by mixing the liquid milk made from beans with other ingredient, according to need, adequately processing the mixture, and adjusting the composition and the physical properties to satisfy the requirements described above. Specifically, methods for adjusting the protein content, the lipid content, the ratio of the protein content to the lipid content, the dietary fiber content, the Brix value, the viscosity, D50, the average molecular weight of proteins, and the pH level are as described above.

When producing the liquid composition according to the present invention, in particular, it may be preferable to subject the liquid milk made from beans to concentration, enzyme treatment, homogenization treatment, and/or heat sterilization. Hereafter, such processing is described separately.

### (Concentration)

When adjusting the protein content, the lipid content, the ratio of the protein content to the lipid content, the dietary fiber content, and the like in the liquid composition, the liquid milk made from beans may be preferably concentrated, depending on the composition of the ingredients of the liquid milk made from beans as a starting material. When concentrating liquid milk made from beans, a method of concentration is not particularly limited. Examples thereof include vacuum concentration, heat concentration, freeze concentration, and membrane concentration, with vacuum concentration being preferable.

### (Enzyme treatment / homogenization treatment)

As described above, it may be preferable to perform the enzyme treatment and/or the homogenization treatment and adjust D50 of the liquid composition and/or the average molecular weight of proteins in the liquid composition when producing the liquid composition according to the present invention. By performing the enzyme treatment and/or the homogenization treatment to regulate D50 of the liquid composition and/or the average molecular weight of proteins in the liquid composition to levels equal to or lower than the upper limits, quality such as a feeling on the tongue can be improved. Either or both the enzyme treatment and the homogenization treatment may be performed. When performing both the enzyme treatment and the homogenization treatment, the homogenization treatment is preferably performed after the enzyme treatment.

The enzyme treatment is performed with the use of either or both of a protein-degrading enzyme and a polysaccharide-degrading enzyme. When the protein content is increased by means of the enzyme treatment involving the use of a protein-degrading enzyme, adjustment of the amount of each ingredient to be incorporated, or concentration, fluidity of the liquid composition according to the present invention can be maintained at a sufficient level. By performing the enzyme treatment involving the use of a polysaccharide-degrading enzyme, also, a pectin, a starch, and a fiber are degraded, the viscosity of the liquid composition according to the present invention is lowered, and sufficient fluidity can be thus maintained. When proteins are degraded enzymatically and the liquid composition according to the present invention is used as a starting material of an acidic beverage, aggregation, precipitation, or a deteriorated feeling on the tongue such as surface roughness caused by the influence of an acidic material to be added can be prevented.

Examples of protein-degrading enzymes used for the enzyme treatment include: protein-degrading enzymes derived from microorganisms belonging to the genera *Bacillus* and *Aspergillus;* plant-derived protein-degrading enzymes, such as papaya-derived papain, pineapple-derived bromelin, and kiwi-derived actinidine; and animal-derived protein-degrading enzymes, such as pancreatin, trypsin, and chymotrypsin. Any thereof can be used by itself or in combinations of 2 or more. Also, commercially available protein-degrading enzymes can be used. Examples of commercially available protein-degrading enzymes include, but are not limited to, Protease M (tradename, Amano Enzyme Inc.), Protease N (tradename, Amano Enzyme Inc.), Protease P (tradename, Amano Enzyme Inc.), Protease A (tradename, Amano Enzyme Inc.), Pepsin (tradename, Wako Pure Chemical Corporation), Peptidase R (tradename, Amano Enzyme Inc.), Flavourzyme (tradename, Novozymes), and Neutrase (tradename, Novozymes).

Examples of polysaccharide-degrading enzymes used for the enzyme treatment include α-amylase, glucoamylase, cellulase, hemicellulase, pectinase, xylanase, galactosidase, polygalacturonase, β-glucosidase, and dextranase, and any thereof can be used by itself or in combinations of 2 or more.

As the protein-degrading enzymes and the polysaccharide-degrading enzymes described above, food materials, such as fruits, vegetables, and mushrooms, containing such enzymes may be used. Examples of food materials include papayas, pineapples, kiwis, figs, mangoes, apples, melons, bananas, pears, strawberries, onions, sweet potatoes, potatoes, asparagus, *Maitake* (*Grifola Frondosa*)*,* ginger, Japanese radish, pumpkins, tomatoes, eggplants, and malted rice. When such food materials are used as enzymes, for example, they may be used in the form of extracts or squeezed juices. With the use of enzyme-containing food materials, the enzyme treatment can be performed while maintaining natural flavors or texture of the food materials.

Concerning the enzyme treatment, the amount of the enzyme to be added, the reaction time, and the reaction temperature can be adequately determined. In general, the amount of the enzyme to be added is preferably 0.01% by mass or more to 10% by mass or less, relative to the solid content of the treatment liquid. While the reaction time is not limited, it is generally 0.5 hours or longer, and preferably 2 hours or longer to generally 6 hours or shorter, and preferably 5 hours or shorter. While the reaction temperature is not limited, it is generally 30°C or higher, and preferably 40°C or higher to generally 60°C or lower, and preferably 50°C or lower. A pH level of the reaction solution is preferably at around an optimal pH level of the enzyme to be used and it may be adequately adjusted. After the completion of the enzyme reaction, it is preferable that the enzyme be inactivated via heating or other means.

The homogenization treatment can be carried out with the use of, for example, a high pressure homogenizer, an ultrasonic homogenizer, a high-performance homogenizer, a masscolloider, or a media stirring mill, and the use of a high pressure homogenizer is preferable. When using a high pressure homogenizer, a pressure may be adequately adjusted depending on an equipment type, a liquid amount, temperature, or liquid properties (e.g., the viscosity or fluidity), and a pressure is adequately around, for example, 50 MPa. By performing the homogenization treatment, liquid properties of the liquid composition according to the present invention can be maintained satisfactorily. When the liquid composition according to the present invention is used as a starting material of an acidic beverage, aggregation, precipitation, or a deteriorated feeling on the tongue such as surface roughness caused by an acidic material added thereto can be prevented. When the homogenization treatment is performed in combination with the enzyme treatment, in addition, an unfavorable taste, such as bitterness or an unpleasant taste, caused by the enzyme treatment can be suppressed.

### (Heat sterilization)

The liquid composition according to the present invention can be subjected to heat sterilization at a level necessary for commercial distribution. For example, heat sterilization can be carried out at a product temperature of 80°C to 120°C for 5 seconds to 15 minutes. If a thermal load exceeding the aforementioned level is applied, in particular, a feeling on the tongue and a feeling of food or drink going down the throat may be deteriorated, and such load may not be preferable from the viewpoint of sensory properties.

### 4. Method for improving a feeling on the tongue, a feeling of food or drink going down the throat, and a flavor of a plant protein-containing liquid composition

The present invention provides a method for improving a feeling on the tongue, a feeling of food or drink going down the throat, and a flavor of a plant protein-containing liquid composition that comprises bean-derived proteins and lipids, comprising a step of preparing the liquid composition according to the present invention by processing liquid milk made from beans to satisfy the requirements for the liquid composition according to the present invention. The details thereof are as described above with regard to the liquid composition according to the present invention and the method for producing the same.

### Examples

Hereafter, the present invention is described in greater detail with reference to the examples. It should be noted that the present invention is not limited to the examples below and that the present invention can be implemented in any form within the scope of the present invention.

### [Reference Example] Method for measuring physical properties

Physical properties of the test products prepared in the following test examples were measured in the manner described below.

### (1) Viscosity

The viscosity of the test product was measured by filling approximately 150 cc of the sample in a measurement container, adjusting the temperature at given levels (5°C, 20°C, and 50°C), mounting the measurement container on the B type viscometer (model: BMII; Toki Sangyo Co., Ltd.), and subjecting the test product to measurement using a rotor (Rotor No. 3) at the number of revolution of 30 rpm for 20 seconds.

### (2) Average molecular weight of proteins

The average molecular weight of proteins in the test product was determined via high-performance liquid chromatography under the following conditions.
Machine type: LC-20AD (Shimadzu Corporation)
Detector: UV/visible detector (Shimadzu Corporation)
Column: TSKgel G2500PWXL, ϕ7.8 mm × 300 mm (Tosoh Corporation)
Column temperature: 40°C
Mobile phase: a mixture of water, acetonitrile, and trifluoroacetic acid (55:45:0.1)
Flow rate: 0.5 ml/min
Measurement wavelength: 220 nm
Amount of injection: 20 µ1

### (3) 50% Cumulative particle diameter (D50)

The 50% cumulative particle diameter (D50) of the test product was measured using the Microtrac laser diffraction/scattering particle size distribution analyzer (MT3300 EX-II, MicrotracBEL Corp.) under the following conditions.
Particle configuration: non-spherical
Particle permeability: permeable
Solvent: water

### [Test Example 1] Examination of the ratio of the protein content to the lipid content in a liquid composition with high protein content

### (Examples 1 to 9 and Comparative Examples 1 to 5)

### (1) Preparation of test products

With the use of the raw materials 1 to 4 containing soybean-derived proteins and lipids shown in Table 1 below, liquid compositions of Examples 1 to 9 and Comparative Examples 1 to 5 shown in Table 2 below were prepared, and drinkability was evaluated. The dietary fiber contents of the raw materials 1 to 4 were measured by the Prosky method.

**[Table 1]**

| | Protein (g/100 g) | Lipid (g/100 g) | Dietary fiber (g/100 g) |
|---|---|---|---|
| Raw material 1: Soy milk *"Oishii Muchousei Tounyu'* (Kikkoman Corp.) | 4.5 | 3.6 | 0.2 |
| Raw material 2: Low-fat soy milk *"Bimi-Tounyu"* (Fuji Oil Co., Ltd.) | 5.5 | 0.6 | 0.2 |
| Raw material 3: Powdered soy protein "Fuji Pro F" (Fuji Oil Co., Ltd.) | 85.8 | 0.2 | 2.2 |
| Raw material 4: Powdered soybean curd residue | 46.3 | 3 | 43.6 |

The raw materials 1 and 2 were first subjected to vacuum concentration at 50°C to adjust the concentration ratios as shown in Table 2 and then used. By mixing the raw materials 1, 2, 3, and 4 and water at mixing ratios (%) shown in Table 2, liquid compositions of Examples 1 to 9 and Comparative Examples 1 to 5 with the different protein content and the different ratio of the protein content to the lipid content (mass ratio) were prepared. The ratio of the protein content to the lipid content was adjusted stepwise from 10:8, which is equivalent to that of a common type of soy milk beverage, to 10:0.03.

The liquid composition of Examples 3 was, as with the case of Test Example 3 described below, subjected to the enzyme treatment and the homogenization treatment, after mixing the raw materials. The enzyme treatment was carried out by adding Protease M (Amano Enzyme Inc.) to the liquid composition in an amount of 0. 1 w/v%, and performing the reaction at 40°C for 1 hour. The homogenization treatment was carried out by, following the enzyme treatment, allowing the test product to pass through the high pressure homogenizer (model: Panda PLUS 2000; IRO SOAVI) two times at a pressure of 50 MPa.

**[Table 2]**

| | Protein (g/100 g) | Lipid (g/100 g) | Protein: lipid (mass ratio) | Dietary fiber (g/100 g) | Raw material 1 | | Raw material 2 | | Raw material 3 | Raw material 4 | Water |
|---|---|---|---|---|---|---|---|---|---|---|---|
| | | | | | Concentration ratio (times) | Mixing ratio (%) | Concentration ratio (times) | Mixing ratio (%) | Mixing ratio (%) | Mixing ratio (%) | Mixing ratio (%) |
| Ex. 1 | 8 | 4 | 10:5 | 0.3 | 1.6 | 63 | 1.7 | 37 | 0 | 0 | 0 |
| Ex. 2 | 10 | 5 | 10:5 | 0.4 | 2 | 63 | 2.1 | 37 | 0 | 0 | 0 |
| Ex. 3 | 12 | 6 | 10:5 | 0.5 | 2.4 | 63 | 2.5 | 37 | 0 | 0 | 0 |
| Ex. 4 | 8 | 1.6 | 10:2 | 0.3 | 1.8 | 13 | 1.6 | 80 | 0 | 0 | 7 |
| Ex. 5 | 10 | 2 | 10:2 | 0.4 | 2.2 | 13 | 2 | 80 | 0 | 0 | 7 |
| Ex. 6 | 12 | 2.4 | 10:2 | 0.5 | 2.7 | 13 | 2.4 | 80 | 0 | 0 | 7 |
| Ex. 7 | 8 | 0.8 | 10:1 | 0.3 | - | 0 | 1.4 | 98 | 0.5 | 0 | 1.5 |
| Ex. 8 | 10 | 1 | 10:1 | 0.4 | - | 0 | 1.7 | 98 | 1 | 0 | 1 |
| Ex. 9 | 12 | 1.2 | 10:1 | 0.4 | - | 0 | 2 | 98 | 1.5 | 0 | 0.5 |
| Comp. Ex. 1 | 10 | 8 | 10:8 | 0.4 | 2.2 | 100 | - | 0 | 0 | 0 | 0 |
| Comp. Ex. 2 | 12 | 0.03 | 10:0.03 | 0.3 | - | 0 | 1 | 1 | 14 | 0 | 85 |
| Comp. Ex. 3 | 15 | 3 | 10:2 | 0.6 | 3.3 | 13 | 3 | 80 | 0 | 0 | 7 |
| Comp. Ex. 4 | 9.6 | 0.2 | 10:0.2 | 3.2 | - | 0 | - | 0 | 7.4 | 7 | 85.6 |
| Comp. Ex. 5 | 10 | 2 | 10:2 | 3.1 | 2.8 | 2.8 | 2.8 | 53 | 0 | 6.4 | 37.8 |

### (2) Evaluation test

The test product prepared in (1) above was heat-sterilized at 85°C for 10 minutes, and, in accordance with Reference Example, the viscosity and the 50% cumulative particle diameter (D50) were measured. In addition, the test product was evaluated in terms of the "feeling on the tongue," the "feeling of food or drink going down the throat," and the "flavor" using the standards described below.

### "Feeling on the tongue"

The feeling on the tongue of the test product is evaluated preferable when it is smooth on the tongue without roughness upon introduction of a food or drink into the mouth.

### "Feeling of food or drink going down the throat"

The feeling of food or drink going down the throat of the test product is evaluated preferable when it is smooth without sticking in the throat.

### "Flavor"

The flavor of the test product is evaluated preferable when an unpleasant taste and an off-flavor characteristic of plant materials, such as a green-beany flavor and a beany flavor, which is felt unpleasantly at the time of eating, are sufficiently low to an extent that unpleasant feeling is not felt even if a full of the test product is contained in the mouth.

Evaluation was performed by the 6 trained expert panels on a 5-point scale: 5: preferable; 4: relatively preferable; 3: yes or no; 2: relatively unpreferable; and 1: unpreferable, and the average thereof was then determined.

On the basis of the results of evaluation together, comprehensive evaluation of drinkability was made in accordance with the following standards.

A: The test product is evaluated very preferable since it is scored 3 points or higher concerning all the evaluation items and scored 3.5 points or higher concerning 2 or more of the evaluation items.

B: The test product is evaluated preferable since it is scored 2.5 points or higher concerning all the evaluation items and scored 3.5 points or higher concerning 1 or more of the evaluation items.

C: The test product is evaluated to lack drinkability since it is scored lower than 2.5 points concerning one of the evaluation items.

D: The test product is evaluated unfavorable since it is scored lower than 2.5 points concerning 2 or more of the evaluation items.

### (3) Test results

The results of the tests are shown in Table 3 below. Table 3 also shows pH and Brix values.

**[Table 3]**

| | Brix | Viscosity (mPa·s) | | | D50 (µm) | pH | Sensory evaluation | | | |
|---|---|---|---|---|---|---|---|---|---|---|
| | | 5°C | 20°C 50°C | | | | Feeling on the tongue | Feeling of food or drink going Flavor down the throat | | Comprehensive evaluation |
| Ex. 1 | 16.8 | 80 | 48 | 38 | 1.63 | 6.52 | 3 | 3.6 | 3.4 | B |
| Ex. 2 | 20.8 | 560 | 380 | 240 | 2.14 | 6.44 | 3.8 | 3.2 | 3.2 | B |
| Ex. 3 | 23.7 | 4300 | 3600 | 2800 | 2.43 | 6.34 | 4.2 | 4.2 | 3 | A |
| Ex. 4 | 15.4 | 40 | 20 | 20 | 1.88 | 6.37 | 3.4 | 3.6 | 3 | B |
| Ex. 5 | 19.4 | 340 | 240 | 200 | 2.12 | 6.36 | 3.8 | 3.6 | 3.2 | A |
| Ex. 6 | 22.4 | 1640 | 1200 | 1000 | 2.46 | 6.36 | 4 | 3.6 | 3.2 | A |
| Ex. 7 | 14.6 | 36 | 20 | 20 | 1.96 | 6.26 | 3.4 | 4 | 3 | B |
| Ex. 8 | 18.4 | 340 | 220 | 200 | 2.24 | 6.28 | 4 | 4.2 | 3.2 | A |
| Ex. 9 | 21.4 | 1800 | 1100 | 960 | 2.68 | 6.25 | 4.4 | 4.2 | 3.2 | A |
| Comp. Ex. 1 | 23 | 4800 | 2100 | 2100 | 1.88 | 6.6 | 3 | 1.7 | 2 | D |
| Comp. Ex. 2 | 15.4 | >20000 | >20000 | >20000 | 34.02 | 7.09 | 3 | 1.3 | 2 | D |
| Comp. Ex. 3 | 27.8 | >20000 | >20000 | >20000 | 2.88 | 6.32 | 3.5 | 2.3 | 2.8 | C |
| Comp. Ex. 4 | 9.9 | 1240 | 1080 | 800 | 46.38 | 6.58 | 2 | 2 | 2 | D |
| Comp. Ex. 5 | 20.1 | 2280 | 2000 | 1860 | 33.06 | 6.32 | 2 | 2 | 3 | D |

As shown in Table 2 and Table 3, the test products of Examples 1 to 9 that satisfy the requirements of the present invention were found to exhibit excellent drinkability as a result of sensory evaluation. In contrast, the test product of Comparative Example 1 with the ratio of the protein content to the lipid content of 10:8 (a concentrate of a common soy milk product) and the test product of Comparative Example 2 with the ratio of the protein content to the lipid content of 10:0.03 (a composition mainly composed of a powdery soybeans protein) were not sufficient in terms of a feeling of food or drink going down the throat and a flavor. The test product of Comparative Example 3 with the viscosity exceeding 20,000 mPa· s at 5°C, 20°C, and 50°C was not sufficient in terms of a feeling of food or drink going down the throat. The test product of Comparative Example 4 with the ratio of the protein content to the lipid content of 10:0.2 and the dietary fiber content of 3.2% by mass and the test product of Comparative Example 5 with the dietary fiber content of 3.1% by mass exhibited fiber's surface roughness. That is, these test products were not sufficient in terms of a feeling on the tongue and a feeling of food or drink going down the throat.

### [Test Example 2] Examination of bean types

### (Examples 10 to 13)

### (1) Preparation of test products

With the use of liquid milk made from beans other than soybeans (soy milk), liquid compositions each with the protein content of 8.0% by mass or more were prepared, and drinkability was evaluated. As beans other than soybeans, *adzuki* beans, peas (green peas), and chickpeas were used, and liquid milk thereof was prepared in the manner described below.

After *adzuki* beans, peas, and chickpeas were soaked separately in a sufficient amount of water at 20°C for 12 hours, soaking water was removed, and a sufficient amount of water was added again to wash the beans. After the rinse water was removed, cold water in an amount 6.5 times greater than the dry weight of raw beans before soaking was added to the beans, and the beans were grounded using a high pressure homogenizer under adequate conditions to adjust D50 to 20 µm or smaller. Thereafter, the beans were heated to 90°C with stirring and filtered through a filter strainer with a mesh size of 40 to obtain liquid milk samples. The resulting liquid milk samples each contained large quantities of starch and pectin and were of high viscosity. Thus, 0.1 w/v% each of amylase and pectinase were added to the liquid milk samples, the reaction was allowed to proceed at 40°C for 1 hour, and the reaction products were heated again at 85°C for 10 minutes. The protein content of the liquid milk sample was calculated by multiplying the nitrogen content analyzed by the Kjeldahl method with the nitrogen-to-protein conversion factor (6.25). The lipid content of the liquid milk sample was calculated on the basis of the protein content above with reference to the protein-to-lipid proportion of materials quoted from the Standard Tables of Food Composition in Japan, 2015 (Seventh Revised Edition). The dietary fiber content of the liquid milk sample was calculated by the Prosky method. Table 4 shows the protein content, the lipid content, and the dietary fiber content, relative to 100 g of each liquid milk sample. The 50% cumulative particle diameters (D50) of the liquid milk samples prepared above were measured in accordance with the Reference Example. As a result, D50 of the liquid milk sample prepared from *adzuki* beans was found to be 14.40 µm, D50 of the liquid milk sample prepared from peas was found to be 12.12 µm, and D50 of the liquid milk sample prepared from chickpeas was found to be 10.25 µm.

**[Table 4]**

| | | Protein (g/100 g) | Lipid (g/100 g) | Dietary fiber (g/100 g) | D50 (µm) |
|---|---|---|---|---|---|
| Liquid milk | *Adzuki* beans | 1.64 | 0.18 | 0.26 | 14.4 |
| | Peas | 1.74 | 0.18 | 0.17 | 12.12 |
| | Chickpeas | 0.93 | 0.24 | 0.14 | 10.25 |

The liquid milk samples prepared from *adzuki* beans, peas, and chickpeas and the liquid milk prepared from soybeans (i.e., soy milk; Kikkoman *Oishii Muchousei* (delicious unadjusted) Soy Milk; protein content: 4.5 g, lipid content: 3.6 g, dietary fiber content: 0.2 g, relative to 100 g) were mixed with each other at the ratio (%) shown in Table 5, the mixture was subjected to vacuum concentration at 50°C, and test products with the protein content of 8.0% by mass or more and different ratios of the protein content to the lipid content were prepared.

**[Table 5]**

| | Protein (g/100 g) | Lipid (g/100 g) | Protein:lipid (mass ratio) | Dietary fiber (g/100 g) | Concentration ratio (times) | Liquid milk | | | |
|---|---|---|---|---|---|---|---|---|---|
| | | | | | | Soybean mixing ratio (%) | *Adzuki* beans mixing ratio (%) | Peas mixing ratio (%) | Chickpeas mixing ratio (%) |
| Ex. 10 | 10 | 5 | 10:5 | 0.9 | 3.9 | 32 | 68 | 0 | 0 |
| Ex. 11 | 9.8 | 4.8 | 10:5 | 0.7 | 3.7 | 33 | 0 | 67 | 0 |
| Ex. 12 | 9.9 | 4.9 | 10:5 | 1 | 6.9 | 14 | 0 | 0 | 86 |
| Ex. 13 | 9.6 | 1.9 | 10:2 | 1.4 | 5.4 | 5 | 95 | 0 | 0 |

### (2) Evaluation test

The test products prepared in (1) were heat sterilized at 85°C for 10 minutes, the viscosity thereof was measured in accordance with the Reference Example, evaluation was performed in terms of the "feeling on the tongue," the "feeling of food or drink going down the throat," and the "flavor" in the same manner as in Test Example 1, and comprehensive evaluation was performed concerning drinkability.

### (3) Test results

The results of the tests are shown in Table 6 below. Table 6 also shows pH and Brix values.

**[Table 6]**

| | Brix | Viscosity (mPa·s) | | | pH | Sensory evaluation | | | |
|---|---|---|---|---|---|---|---|---|---|
| | | 5°C | 20°C | 50°C | | Feeling on the tongue | Feeling of food or drink going down the throat | Flavor | Comprehensive evaluation |
| Ex. 10 | 23.8 | 3800 | 3200 | 2800 | 6.68 | 3.6 | 4 | 3.8 | A |
| Ex. 11 | 23.1 | 3800 | 3200 | 2680 | 6.42 | 4 | 3.6 | 3.4 | A |
| Ex. 12 | 20.8 | 3400 | 3000 | 2600 | 6.88 | 3.8 | 3.4 | 3.6 | A |
| Ex. 13 | 23.6 | 4300 | 4300 | 2840 | 6.64 | 3.8 | 3.6 | 3.4 | A |

As shown in Table 5 and Table 6, the test products of Examples 10 to 13 prepared from soy milk of beans other than soybeans that satisfy the requirements of the present invention were found to exhibit excellent drinkability as a result of sensory evaluation.

### [Test Example 3] Examination of enzyme treatment and/or homogenization treatment

### (Examples 14 to 20 and Comparative Examples 6 and 7)

### (1) Preparation of test products

Liquid compositions of Examples 14 to 16 (protein content: 12% by mass) and liquid compositions of Examples 17 to 20 and Comparative Examples 6 and 7 (protein content: 15% by mass) shown in Table 7 below were prepared, and drinkability was evaluated.

The test products with the protein content of 12% by mass (Examples 14 to 16) were subjected to the enzyme treatment with the addition of 0.1 w/v% of Protease M (Amano Enzyme Inc.) to the liquid composition, and the reaction was allowed to proceed at 40°C for 1 hour (*1 in the table). The homogenization treatment was carried out by allowing the test products to pass through the high pressure homogenizer (model: Panda PLUS 2000; IRO SOAVI) two times at a pressure of 50 MPa. When the test products were to be subjected to both the enzyme treatment and the homogenization treatment, the enzyme treatment was followed by the homogenization treatment.

The test products with the protein content of 15% by mass (Examples 17 to 20 and Comparative Examples 6 and 7) were subjected to the enzyme treatment with the addition of 0.1 w/v% each of Protease M (Amano Enzyme Inc.) and Pectinase G (Amano Enzyme Inc.) to the liquid composition, and the reaction was allowed to proceed at 40°C for 1 hour (*2 in the table). Alternatively, the enzyme reaction was performed with the addition of 2 w/v% of kiwi juice instead of the enzyme preparation, and the reaction was allowed to proceed at 40°C for 1 hour (*3 in the table). The homogenization treatment was carried out by allowing the test products to pass through the high pressure homogenizer (model: Panda PLUS 2000; IRO SOAVI) two times at a pressure of 50 MPa. When the test products were to be subjected to both the enzyme treatment and the homogenization treatment, the enzyme treatment was followed by the homogenization treatment.

**[Table 7]**

| | Protein (g/100 g) | Lipid (g/100 g) | Protein:lipid (mass ratio) | Dietary fiber (g/100 g) | Enzyme treatment | Homogenization treatment |
|---|---|---|---|---|---|---|
| Ex. 14 | 12 | 2.4 | 10:2 | 0.5 | Performed*1 | Not performed |
| Ex. 15 | 12 | 2.4 | 10:2 | 0.5 | Not performed | Performed |
| Ex. 16 | 12 | 2.4 | 10:2 | 0.5 | Performed*1 | Performed |
| Ex. 17 | 15 | 3 | 10:2 | 0.6 | Performed*2 | Not performed |
| Ex. 18 | 15 | 3 | 10:2 | 0.6 | Performed*3 | Not performed |
| Ex. 19 | 15 | 3 | 10:2 | 0.6 | Not performed | Performed |
| Ex. 20 | 15 | 3 | 10:2 | 0.6 | Performed*2 | Performed |
| Comp. Ex. 6 | 15 | 9 | 10:6 | 0.6 | Performed*2 | Performed |
| Comp. Ex. 7 | 15 | 3 | 10:2 | 3.1 | Performed*2 | Performed |

### (2) Evaluation test

The test products prepared in (1) were heat sterilized at 85°C for 10 minutes, the viscosity, the average molecular weight of proteins, and the 50% cumulative particle diameter (D50) were measured in accordance with Reference Example. In addition, the test products were subjected to sensory evaluation in the same manner as performed in Test Example 1, and comprehensive evaluation was performed concerning drinkability.

### (3) Test results

The results of the tests are shown in Table 8 below. Table 8 also shows pH and Brix values.

**[Table 8]**

| | Brix | Viscosity (mPa·s) | | | | | | Sensory evaluation | | | |
|---|---|---|---|---|---|---|---|---|---|---|---|
| | | 5°C | 20°C | 50°C | Protein average molecular weight | D50 (µm) | pH | Feeling on the tongue | Feeling of food or drink going down the throat | Flavor | Comprehensive evaluation |
| Ex. 14 | 18.1 | 480 | 380 | 300 | 1080 | 1.62 | 6.2 | 4.3 | 4.3 | 3.9 | A |
| Ex. 15 | 20.9 | 880 | 720 | 580 | 4350 | 0.96 | 6.2 | 4.7 | 4.7 | 4.1 | A |
| Ex. 16 | 18.4 | 320 | 280 | 200 | 1070 | 0.88 | 6.2 | 4.7 | 4.7 | 4.1 | A |
| Ex. 17 | 22.6 | 2400 | 1920 | 1680 | 1200 | 1.6 | 6.2 | 3.8 | 3.8 | 2.8 | B |
| Ex. 18 | 22.3 | 4000 | 3000 | 2600 | 3600 | 1.84 | 6 | 4 | 4 | 2.8 | B |
| Ex. 19 | 26.2 | 3800 | 3200 | 2480 | 4550 | 0.98 | 6.2 | 4.3 | 4.3 | 3.1 | A |
| Ex. 20 | 23 | 2000 | 1640 | 14410 | 1090 | 0.86 | 6.2 | 4.2 | 4.2 | 3.1 | A |
| Comp. Ex. 6 | 24.7 | 8000 | 6800 | 5400 | 1400 | 0.94 | 6.2 | 3.5 | 3.5 | 1.3 | C |
| Comp. Ex. 7 | 26.1 | 4200 | 3200 | 2800 | 1200 | 0.92 | 6.4 | 2,5 | 2.5 | 1.8 | C |

As shown in Table 7 and Table 8, the test products of Examples 14 to 20 that satisfy the requirements of the present invention were found to exhibit excellent drinkability as a result of sensory evaluation. In contrast, the test product of Comparative Example 6 with the ratio of the protein content to the lipid content of 10:6 and the viscosity exceeding 5,000 mPa·s at 5°C, 20°C, and 50°C was not sufficient in terms of a flavor. Further, the test product of Comparative Example 7 with the dietary fiber content of 3.1% by mass exhibited fiber's surface roughness. That is, this test product was not sufficient in terms of a feeling on the tongue, a feeling of food or drink going down the throat, and a flavor.

Test products were prepared with the use of cellulase, hemicellulase, and amylase in stead of the enzyme used to prepare the test product of Examples 17, and the resulting test products were tested. The test results were the same as those obtained in Examples 17.

### [Industrial Applicability]

The present invention is applicable in the field of production of high-protein beverage products and seasoning products, such as hot pot soup broth and dressing, that enable efficient intake of high-quality plant proteins derived from beans and provide a mild feeling on the tongue and a good flavor.

All publications, patents, and patent applications cited herein are incorporated herein by reference in their entirety.

## Claims

1. A plant protein-containing liquid composition comprising bean-derived proteins and lipids that satisfies the requirements (a) to (e) below:
(a) the protein content in the liquid composition is 6% to 17% by mass;
(b) the mass ratio of the protein content to the lipid content is 10:0.7 to 10:5.5;
(c) the Brix value is 10% or higher;
(d) the dietary fiber content in the liquid composition is 3% by mass or lower; and
(e) the viscosity measured using the B type viscometer satisfies at least one of the requirements (e1) to (e3) below:
(e1) the viscosity at 20°C is 4,600 mPa·s or lower;
(e2) the viscosity at 5°C is 5,000 mPa·s or lower; and
(e3) the viscosity at 50°C is 3,400 mPa·s or lower.

2. The plant protein-containing liquid composition according to Claim 1, wherein the 50% cumulative particle diameter (D50) is 20 µm or smaller.

3. The plant protein-containing liquid composition according to Claim 1 or 2, wherein the liquid composition contains liquid milk made from beans subjected to at least one of the enzyme treatment and the homogenization treatment.

4. The plant protein-containing liquid composition according to Claim 3, wherein the enzyme is at least one of a protein-degrading enzyme and a polysaccharide-degrading enzyme.

5. The plant protein-containing liquid composition according to Claim 3 or 4, wherein the treatment is carried out, so that the plant protein-containing liquid composition after the treatment satisfies at least one of the requirements (f) and (g) below:
(f) the average molecular weight of proteins in the liquid composition is 4,000 or smaller; and
(g) the 50% cumulative particle diameter (D50) is 2 µm or smaller.

6. The plant protein-containing liquid composition according to any one of Claims 1 to 5, wherein a pH level is 5.5 to 7.5.

7. The plant protein-containing liquid composition according to any one of Claims 1 to 6, wherein the beans are one or more types selected from among soybeans, peas, chickpeas, *adzuki* beans, mung beans, and peanuts.

8. The plant protein-containing liquid composition according to any one of Claims 1 to 7, wherein the beans contain soybeans in an amount of 5% by mass or more relative to the total amount of the beans.

9. A food or beverage product comprising the plant protein-containing liquid composition according to any one of Claims 1 to 8.

10. A method for producing the plant protein-containing liquid composition according to any one of Claims 1 to 8, comprising a step of processing liquid milk made from beans to satisfy the requirements (a) to (e) below:
(a) the protein content in the liquid composition is 6% to 17% by mass;
(b) the mass ratio of the protein content to the lipid content is 10:0.7 to 10:5.5;
(c) the Brix value is 10% or higher;
(d) the dietary fiber content in the liquid composition is 3% by mass or lower; and
(e) the viscosity measured using the B type viscometer satisfies at least one of the requirements (e1) to (e3) below:
(e1) the viscosity at 20°C is 4,600 mPa·s or lower;
(e2) the viscosity at 5°C is 5,000 mPa·s or lower; and
(e3) the viscosity at 50°C is 3,400 mPa·s or lower.

11. The method of production according to Claim 10, wherein the step of processing liquid milk made from beans comprises a step of subjecting the liquid milk made from beans to at least one of the enzyme treatment and the homogenization treatment.

12. The method of production according to Claim 11, wherein, in the step of treatment, both the enzyme treatment and the homogenization treatment are carried out and the homogenization treatment is carried out after the enzyme treatment.

13. The method of production according to Claim 11 or 12, wherein the step of treatment is carried out, so that the plant protein-containing liquid composition after the treatment satisfies at least one of the requirements (f) and (g) below:
(f) the average molecular weight of proteins in the liquid composition is 4,000 or smaller; and
(g) the 50% cumulative particle diameter (D50) is 2 µm or smaller.

14. A method for improving a feeling on the tongue, a feeling of food or drink going down the throat, and a flavor of a plant protein-containing liquid composition comprising bean-derived proteins and lipids, comprising a step of processing liquid milk made from beans to satisfy the requirements (a) to (e) below to produce the plant protein-containing liquid composition according to any one of Claims 1 to 8:
(a) the protein content in the liquid composition is 6% to 17% by mass;
(b) the mass ratio of the protein content to the lipid content is 10:0.7 to 10:5.5;
(c) the Brix value is 10% or higher;
(d) the dietary fiber content in the liquid composition is 3% by mass or lower; and
(e) the viscosity measured using the B type viscometer satisfies at least one of the requirements (e1) to (e3) below:
(e1) the viscosity at 20°C is 4,600 mPa·s or lower;
(e2) the viscosity at 5°C is 5,000 mPa·s or lower; and
(e3) the viscosity at 50°C is 3,400 mPa·s or lower.

15. The method according to Claim 14, wherein the step of processing liquid milk made from beans comprises subjecting the liquid milk made from beans to at least one of the enzyme treatment and the homogenization treatment.

16. The method according to Claim 15, wherein, in the step of treatment, both the enzyme treatment and the homogenization treatment are carried out and the homogenization treatment is carried out after the enzyme treatment.

17. The method according to Claim 15 or 16, wherein the step of treatment is carried out, so that the plant protein-containing liquid composition after the treatment satisfies at least one of the requirements (f) and (g) below:
(f) the average molecular weight of proteins in the liquid composition is 4,000 or smaller; and
(g) the 50% cumulative particle diameter (D50) is 2 µm or smaller.
